# FASCICULE DE BREVET EUROPEEN

(11) **EP 0 475 327 B1**
(45) Date de publication et mention de la délivrance du brevet: **24.08.1994**
(21) Numéro de dépôt: 91115216.3
(22) Date de dépôt: 09.09.1991
(51) Int. Cl.: F01D 17/14, F16K 47/08

(54) **Soupape avec siège à créneaux**
Ventil mit verzahntem Sitz
Valve with slitted seat

(30) Priorité: 13.09.1990 FR 9011337
(43) Date de publication de la demande: 18.03.1992
(73) Titulaire: GEC ALSTHOM SA, 75116 Paris (FR)
(72) Inventeur: Vincent de Paul, Michel, F-63000 Senlis (FR); Detanne, François, F-75017 Paris (FR)
(74) Mandataire: Weinmiller, Jürgen

(56) Documents cités:
- DE-A- 3 137 687
- DE-A- 3 138 459
- US-A- 4 705 071

## Description

L'invention se rapporte aux soupapes et plus particulièrement aux soupapes de réglage des turbines à vapeur.

Ces soupapes sont utilisées pour régler le débit de vapeur qui arrive à la turbine; pour les débits faibles, la soupape laisse à la vapeur un passage de faible section et compte tenu des différences de pression entre l'amont et l'aval de la soupape, des vitesses supersoniques sont atteintes au voisinage de la zone où le clapet vient en contact avec le siège. Des ondes de choc et des décollements du fluide des parois de la soupape peuvent alors se produire et entraîner des vibrations du clapet, et un niveau de bruit excessif.

Une solution pour résoudre ce problème consiste à diviser la nappe d'écoulement en plusieurs petits jets. Ceci peut être réalisé avec un siège comportant un collet d'étranglement dans le pourtour duquel sont réparties des fentes séparant le collet en créneaux comme cela est décrit par exemple dans le certificat d'utilité N°76 12647. Voir aussi le document DE-A-3 138 459.

Plusieurs grosses turbines à vapeur de part le monde sont équipées de telles soupapes, mais il est apparu qu'un certain niveau vibratoire persistait à charge partielle.

La soupape selon l'invention permettant d'éliminer les vibrations à charge partielle est caractérisée en ce que chaque créneau comporte sur sa face en regard du clapet une cloison centrale verticale séparant deux évidements symétriques.

Les évidemments symétriques peuvent être des alvéoles ou des chanfreins.

La cloison a une largeur allant de 1/10ème à 1/5ème de la largeur du créneau.

La présente invention sera mieux comprise à la lumière de la description qui va suivre dans laquelle.

La figure 1 représente une soupape connue.

La figure 2 représente une coupe horizontale de la soupape de la figure 1.

La figure 3 représente l'écoulement dans la soupape de la figure 1.

La figure 4 représente une coupe partielle de la soupape de la figure 3.

La figure 5 représente une vue de face d'un créneau d'un siège de soupape selon l'invention.

La figure 6 représente une vue de côté du créneau de la figure 5.

La figure 7 représente une vue de face d'une première variante d'un créneau du siège selon l'invention.

Les figures 8 et 9 représentent une vue de côté et une coupe horizontale du créneau de la figure 7.

La figure 10 représente une coupe horizontale d'une seconde variante d'un créneau du siège selon l'invention.

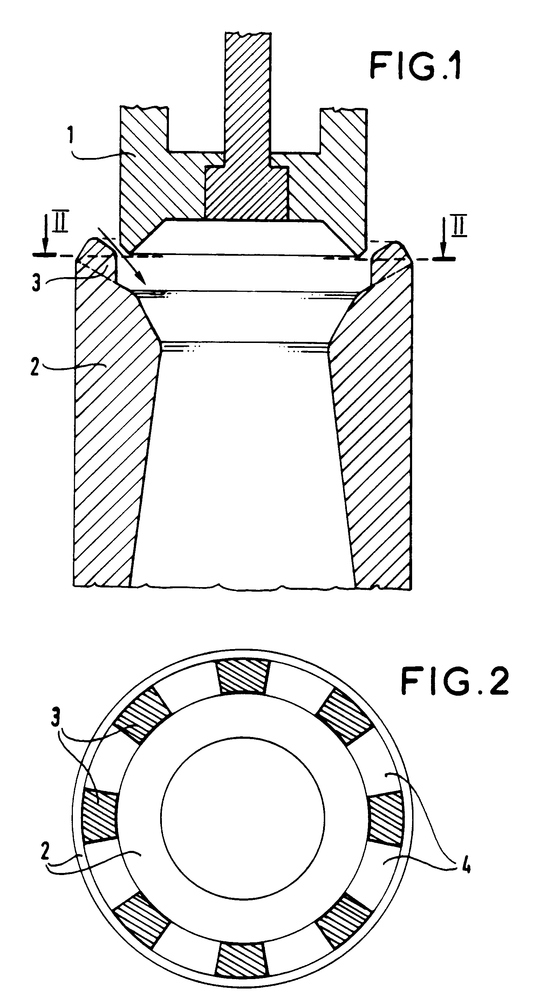

Les figures 1 et 2 représentent une soupape connue qui comporte un clapet 1 venant reposer sur un siège 2. Sur ce siège sont disposés des créneaux 3 séparés par des fentes 4. Ces créneaux 3 disposés circulairement entourent le clapet 1 lorsqu'il repose sur le siège 2.

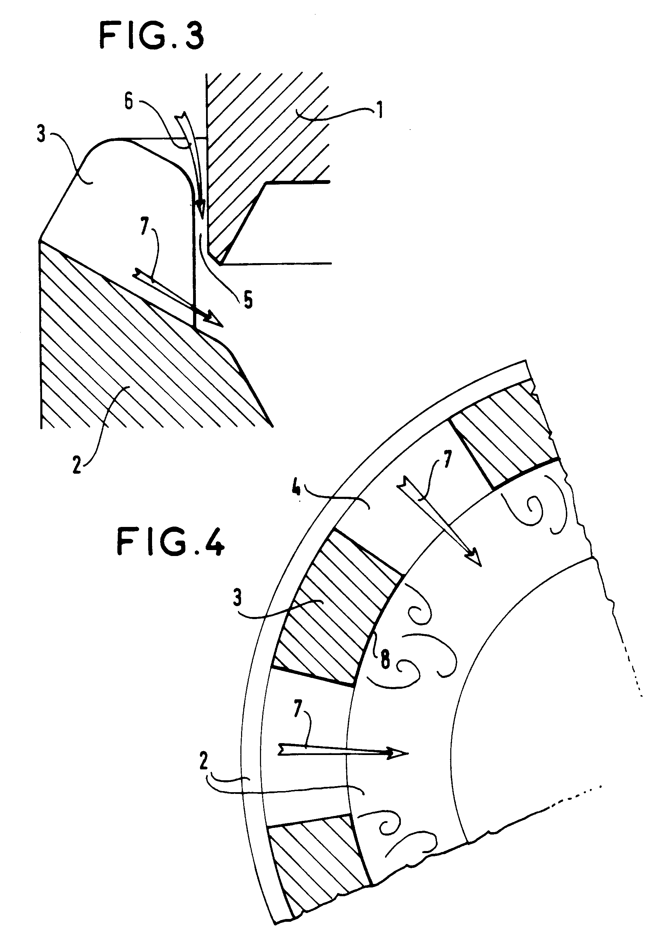

Lorsque le clapet est réglé à mi-hauteur du créneau (voir figures 3 et 4) une certaine quantité de fluide 6 va passer par le canal existant entre le clapet 1 et les créneaux 3 du siège 2. L'écoulement principal 7 passe dans les fentes 4.

En aval des créneaux 3 va exister une zone d'eau morte qui fluctue à cause d'un échappement non symétrique de tourbillons à partir des deux bords du créneau 3; ceci va entraîner une fluctuation de la pression qui va remonter dans le canal 5 et entraîner des efforts instationnaires sur le clapet 1 et donc des vibrations.

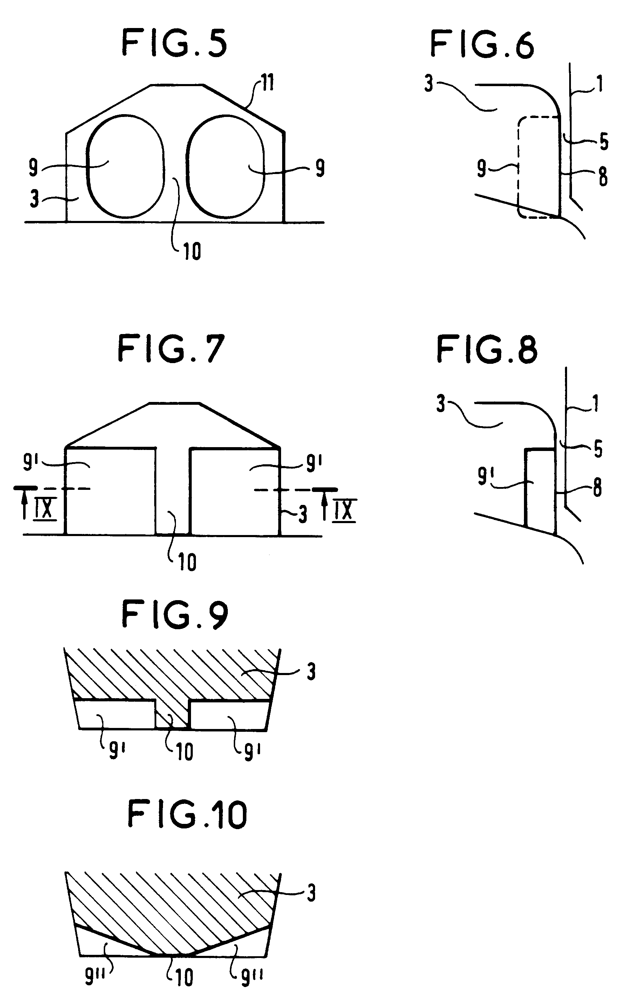

Sur les figures 5 et 6 on a représenté un créneau de la soupape selon l'invention.

Ce créneau 3 comporte sur sa face 8 en regard du clapet 1 deux alvéoles 9 symétriques par rapport au plan médian du créneau 3. Les deux alvéoles 9 sont séparées par une cloison centrale 10. Grâce à cette cloison 10, on évite que la zone d'eau morte ne fluctue et crée une fluctuation de pression. On rend ainsi l'échappement des tourbillons symétriques par rapport au plan méridien du créneau.

La largeur de la cloison 10 est comprise entre le 1/10ème et le 1/5ème de la largeur du créneau 9.

Elle va du pied du créneau 3 jusqu'à la partie où commencent les surfaces biseautées 11 chapotant le créneau 3.

En variante, on peut remplacer les alvéoles 9 par des évidements 9' débouchant sur les faces latérales du créneau (figures 7, 8, 9) ou par des chanfreins 9'' partant de la cloison centrale 10.

Les essais effectués en soufflerie montrent que ces évidements 9, 9', 9'' éliminent pratiquement toutes les vibrations du clapet.

## Revendications

1. Soupape comportant un clapet (1) coopérant avec un siège (2) muni de créneaux (3) disposés autour de la partie du siège (2) sur laquelle vient reposer le clapet (1) caractérisée en ce que chaque créneau (3) comporte sur sa face (8) en regard du clapet (1) une cloison (10) centrale verticale séparant deux évidements symétriques (9, 9', 9'').

2. Soupape selon la revendication 1 caractérisée en ce que les évidements sont constitués par des alvéoles (9').

3. Soupape selon la revendication 1 caractérisée en ce que les évidements sont constitués par des chanfreins (9'') partant de la cloison (10) pour aboutir sur les faces latérales des créneaux (4).

4. Soupape selon l'une des revendications précédentes caractérisée en ce que la cloison (10) a une largeur allant de 1/10 à 1/5 de la largeur du créneau (3).

## Claims

1. Valve comprising a valve obturator (1) cooperating with a valve seat (2) provided with crenellations disposed around the part of the valve seat (2) on which the valve obturator (1) rests characterised in that each crenellation (3) comprises on its surface (8) facing the valve obturator (1) a vertical central partition (10) between two symmetrical openings (9, 9', 9'').

2. Valve according to claim 1 characterised in that the openings are in the form of cells (9').

3. Valve according to claim 1 characterised in that the openings are chamfers (9'') extending from the partition (10) to the lateral surfaces of the crenellations (4).

4. Valve according to any one of the preceding claims characterised in that the width of the partition (10) is between 1/10th and 1/5th the width of the crenellation (3).

## Patentansprüche

1. Ventil mit einer Klappe (1), die mit einem Sitz (2) zusammenwirkt, der mit Rippen (3) versehen ist, die um den Teil des Sitzes (2) herum angeordnet sind, auf dem die Klappe (1) aufliegt, dadurch gekennzeichnet, daß jede Rippe (3) auf ihrer Seite (8) gegenüber der Klappe (1) eine zentrale senkrechte Trennwand (10) aufweist, die zwei symmetrische Aussparungen (9, 9', 9'') voneinander trennt.

2. Ventil nach Anspruch 1, dadurch gekennzeichnet, daß die Aussparungen aus Aushöhlungen (9') bestehen.

3. Ventil nach Anspruch 1, dadurch gekennzeichnet, daß die Aussparungen aus Abschrägungen (9'') bestehen, die von der Trennwand (10) ausgehen, um auf den Seitenflächen der Schlitze (4) zu enden.

4. Ventil nach einem der vorhergehenden Ansprüche, dadurch gekennzeichnet, daß die Trennwand (10) eine Breite hat, die zwischen 1/10 und 1/5 der Breite der Rippe (3) beträgt.
